# FASCICULE DE BREVET EUROPEEN

(11) **EP 1 258 420 B1**
(45) Date de publication et mention de la délivrance du brevet: **31.08.2005**
(21) Numéro de dépôt: 02076721.6
(22) Date de dépôt: 01.05.2002
(51) Int. Cl.: B62J 15/00

(54) **Garde-boue en matière plastique**
Kotflügel aus Plastik-Material
Mudguard from plastic material

(30) Priorité: 15.05.2001 NL 1018078
(43) Date de publication de la demande: 20.11.2002
(73) Titulaire: Curana BVBA, 8800 Roeselare (BE)
(72) Inventeur: Vens, Dirk, 8800 Roeselare (BE)
(74) Mandataire: Ostyn, Frans

(56) Documents cités:
- DE-A- 2 248 943
- DE-U- 29 622 790
- GB-A- 474 794
- GB-A- 506 494
- US-A- 4 708 665

## Description

La présente invention concerne d'une part un garde-boue comprenant un corps fabriqué principalement en matière plastique, dans lequel au moins un élément de renforcement est logé afin d'augmenter la rigidité de l'ensemble, et d'autre part également un procédé pour la fabrication d'un tel garde-boue.

Dans la plupart des moyens de transport sur roues, et en particulier dans les moyens de transport à deux roues, comme les vélos, les vélomoteurs et les motocyclettes, on prévoit en face de chaque roue un garde-boue destiné à retenir l'eau et/ou la boue projetée par la roue. Un garde-boue généralement connu pour les vélos est réalisé en un ruban allongé en matériau plat qui est cintré suivant sa direction longitudinale, en correspondance avec le diamètre de la roue, et qui présente aussi en coupe transversale un profil cintré essentiellement en forme de gouttière. Le garde-boue est fixé en face de la surface de roulement du pneu, de telle façon qu'il épouse une partie du périmètre de la roue. Le garde-boue est fixé par le haut au cadre du vélo (le garde-boue avant est fixé à la fourche avant) et il est fixé dans le bas à l'axe de la roue au moyen de tiges de fixation placées de part et d'autre de la roue.

Les garde-boue métalliques traditionnels présentent l'inconvénient d'être lourds et de pouvoir être endommagés relativement facilement. Dans le domaine des vélos de course, on est dès lors passé rapidement à des garde-boue en matière plastique, qui sont par nature plus légers et qui sont plus résistants aux dommages. Vu la tendance générale vers des vélos plus légers, plus sportifs et d'aspect plus contemporain, on s'est aussi mis à remplacer de plus en plus le garde-boue métallique par un garde-boue en matière plastique, même sur les vélos courants. Un garde-boue en matière plastique bien connu pour les vélos est fabriqué en un tout en matière plastique, par un procédé d'extrusion.

D'un point de vue fonctionnel, les garde-boue en matière plastique connus ne semblent cependant pas constituer une alternative totale au garde-boue métallique. Notamment, le garde-boue en matière plastique est très facilement déformable, de sorte qu'en roulant il va vibrer ou osciller de façon gênante.

Pour remédier à cet inconvénient, on a mis au point des garde-boue en matière plastique avec des éléments de renforcement métalliques. Ainsi, il est connu, entre autres par le brevet GB 820 973, de renforcer un garde-boue en matière plastique par un ruban métallique s'étendant suivant la direction longitudinale de celui-ci. Après la production d'un ensemble en matière plastique, par exemple par extrusion, le ruban métallique peut être glissé dans une cannelure dans la face supérieure de l'ensemble en matière plastique. Le ruban métallique sert en outre d'élément décoratif qui contribue à l'aspect du garde-boue.

En outre, il est également connu, par le modèle d'utilité allemand n° 1.914.487, de prévoir des fils de stabilisation ou de fins rubans métalliques dans un garde-boue fabriqué en matière plastique, afin d'obtenir une meilleure stabilisation du garde-boue.

Par le brevet français FR 2 281 264, il est également connu de fabriquer un garde-boue par une opération de coextrusion d'une mince âme métallique (par exemple un film d'aluminium) et d'une matière plastique d'enrobage.

Pour limiter le poids ajouté, on utilise dans ces garde-boue connus des âmes métalliques très minces ou des fils de renforcement très fins. Ceux-ci n'augmentent la rigidité du garde-boue que dans une faible mesure, avec la conséquence que l'on ne parvient pas toujours, avec les garde-boue ainsi obtenus, à réduire dans une mesure satisfaisante les vibrations et les oscillations gênantes pendant que l'on roule. En prévoyant des points de fixation supplémentaires pour le garde-boue, on y remédie dans une certaine mesure, mais ceci augmente le poids et le prix de revient et complique en outre aussi le montage du garde-boue. Le garde-boue doit aussi pouvoir être adapté à d'autres types de vélos, ce qui est plus difficile dans la mesure où il faut prévoir davantage de points de fixation. Si l'on utilisait des corps de renforcement de plus forte épaisseur dans le garde-boue en matière plastique connu, cela augmenterait la rigidité mais cela entraînerait aussi une hausse défavorable du poids et une augmentation proportionnelle du prix de revient.

Un autre inconvénient des garde-boue en matière plastique connus est que, en raison de leur manque de stabilité, ils doivent être pourvus de moyens de fixation qui sont arrachés si un objet s'introduit entre le pneu et le garde-boue. Cela est nécessaire pour éviter que la roue se bloque. Ces moyens de fixation sont plus complexes et plus coûteux que les moyens de fixation habituels.

Un objet de l'invention est de proposer un garde-boue en matière plastique qui, pour un poids comparable, présente une rigidité nettement plus grande que les garde-boue en matière plastique connus avec des éléments de renforcement, dans lequel cette rigidité est suffisamment élevée pour rendre superflus les moyens de fixation pouvant être arrachés mentionnés plus haut. Un autre objet de l'invention est de proposer un garde-boue qui résiste bien aux dommages, qui offre un aspect contemporain et qui peut en outre être fabriqué en un tout, par un procédé de fabrication aisément applicable et pour un coût de matières premières et de fabrication relativement bas.

Les objectifs mentionnés plus haut sont atteints en prévoyant, suivant la présente invention, un garde-boue qui comprend un corps fabriqué principalement en matière plastique dans lequel au moins un élément de renforcement est logé pour augmenter la rigidité du corps, et dont l'élément de renforcement précité a une structure sandwich.

En utilisant une structure sandwich comme élément de renforcement, on crée une rigidité maximale pour un minimum de poids. Un élément sandwich peut en effet avoir une épaisseur relativement grande, mais il peut par exemple se composer de deux couches métalliques minces et d'une couche intermédiaire plus épaisse en matière plastique, de sorte que le poids et le prix de revient de celui-ci restent limités. La rigidité (également la rigidité en torsion) de la structure sandwich est en effet obtenue principalement par la structure et moins par les propriétés intrinsèques des matériaux. Avec un tel élément sandwich, il est possible de fabriquer un garde-boue très léger qui possède une rigidité (et une rigidité en torsion) suffisante pour réduire dans une mesure importante les vibrations et les oscillations gênantes du garde-boue et pour rendre superflus les moyens de fixation pouvant être arrachés mentionnés plus haut. En outre, le garde-boue suivant la présente invention conserve l'aspect contemporain d'un garde-boue en matière plastique, et il peut être produit en un tout par un procédé aisément applicable, comme par exemple un procédé d'extrusion, pour un coût de matières premières et de fabrication relativement bas.

La structure sandwich du moyen de renforcement peut être obtenue à partir de toute combinaison possible de matériaux. Ainsi, cette structure sandwich peut par exemple être composée de différentes couches de matière plastique, dans lesquelles il est prévu par exemple deux couches externes en une première matière plastique, telle qu'un matériau composite ou une matière plastique renforcée par des fibres de verre, et une couche intermédiaire en une seconde matière plastique (par exemple en polypropylène). La première matière plastique est de préférence plus dure que la seconde matière plastique. La seconde matière plastique peut aussi être une matière plastique cellulaire.

Dans une première variante préférée du garde-boue de la présente invention, l'élément de renforcement est composé d'au moins deux couches d'une première matière plastique, entre lesquelles il est prévu une couche intermédiaire en une seconde matière plastique. Un tel élément de renforcement peut être fabriqué pendant le processus de production du garde-boue, par exemple par coextrusion des deux matières plastiques différentes du corps de renforcement et de la matière plastique du corps du garde-boue, ou par un procédé de coulée par injection dans lequel les deux matières plastiques différentes de l'élément de renforcement sont introduites dans le moule en même temps que la matière plastique destinée au corps de garde-boue.

Dans une deuxième variante préférée du garde-boue de la présente invention, l'élément de renforcement comprend au moins deux couches métalliques entre lesquelles il est prévu une couche intermédiaire qui est fabriquée essentiellement en une matière non métallique.

Les couches métalliques peuvent être relativement minces, par exemple 0,2 mm, tandis que la couche intermédiaire peut être plus épaisse et avoir par exemple une épaisseur de 0,8 mm. La matière de la couche intermédiaire a de préférence un poids spécifique nettement inférieur à celui du métal dont les couches métalliques sont constituées. Un tel élément de renforcement peut ainsi avoir un poids particulièrement faible et néanmoins, grâce à son épaisseur relativement forte, assurer une rigidité particulièrement grande au garde-boue tout entier. Non seulement la résistance à la flexion dans un plan parallèle à la roue, mais aussi la résistance à la torsion du garde-boue sont nettement meilleures que pour les garde-boue connus avec des éléments de renforcement. Un avantage supplémentaire de l'emploi de couches métalliques est que celles-ci peuvent servir de conducteur de courant intégré.

Le garde-boue est de préférence exécuté avec un élément de renforcement dont ladite couche intermédiaire est fabriquée principalement en matière plastique. Les matières plastiques ont la préférence en raison de leur faible poids, de leur bonne ouvrabilité avec les techniques de production généralement connues et de leur prix de revient relativement bas.

Dans une forme de réalisation particulièrement avantageuse, ladite couche intermédiaire de l'élément de renforcement se compose essentiellement de la même matière plastique que la matière plastique dont est fait ledit corps de garde-boue. On peut ainsi obtenir par chauffage une liaison ou une fusion entre la matière plastique du corps de renforcement et la matière plastique du corps de garde-boue qui enrobe au moins en partie ce corps de renforcement.

Ladite couche intermédiaire se compose de préférence de polypropylène ou de polyéthylène. Lesdites couches métalliques sont de préférence fabriquées en aluminium.

Dans une autre forme de réalisation préférée, au moins une desdites couches métalliques est prévue pour être utilisée comme conducteur pour un courant électrique. De cette manière, des conducteurs électriques séparés deviennent superflus.

Ledit élément de renforcement comporte de préférence deux couches extérieures en métal et une couche intermédiaire en polypropylène, tandis que les couches métalliques ont une épaisseur comprise entre 0,08 mm et 0,3 mm et que l'épaisseur de la couche intermédiaire est comprise entre 0,5 mm et 2 mm.

De préférence, l'élément de renforcement comprend en outre encore un liant avec lequel on peut réaliser une liaison entre les couches métalliques et la couche intermédiaire en matière plastique. Pour certains matériaux, l'adhérence entre la matière des couches extérieures et la matière de la couche intermédiaire peut être améliorée en utilisant un liant. Une bonne adhérence entre les différentes matières de la structure sandwich est extrêmement importante pour la rigidité de la structure.

Ledit corps est de préférence fabriqué en un tout. Un tel procédé de production est très simple et ne nécessite aucun assemblage de pièces.

La présente invention concerne également un procédé pour la fabrication d'un garde-boue en matière plastique, dans lequel un corps de garde-boue est formé en un tout en matière plastique. Comme on l'a expliqué plus haut, il existe des procédés de coextrusion par lesquels des éléments de renforcement métalliques sont noyés dans u garde-boue en matière plastique.

Pour remédier aux inconvénients mentionnés plus haut de ces garde-boue connus, la présente invention propose également un procédé dans lequel un élément de renforcement avec une structure sandwich est, pendant la production du corps de garde-boue, enrobé au moins en partie par la matière du corps de garde-boue.

Dans ce procédé, le corps de garde-boue est de préférence formé par l'application d'un procédé de coextrusion ou un procédé de coulée par injection. Un procédé de coulée par injection offre l'avantage que diverses pièces, comme par exemple un support de phare, des moyens de fixation pour un filet de roue arrière et un pare-boue, peuvent être formés d'une pièce avec le corps de garde-boue. On réduit ainsi le nombre de pièces nécessaires et on évite des travaux de montage qui prennent du temps.

Dans un procédé particulier suivant la présente invention, un élément de renforcement est formé, pendant le procédé de production du corps de garde-boue, en formant une structure sandwich en au moins deux matières plastiques différentes. La structure sandwich ainsi formée se compose alors par exemple de deux couches extérieures en un matériau composite ou une matière plastique renforcée par des fibres de verre, et d'une couche intermédiaire en polypropylène ou en polyéthylène, ou en une matière plastique cellulaire.

Dans un procédé de coulée par injection, on peut introduire deux matières plastiques différentes dans le moule de coulée par injection suivant un procédé connu de coulée par injection à deux composants. Dans un procédé d'extrusion existe également la possibilité d'extruder ensemble deux matières plastiques différentes. On peut ainsi former une structure sandwich en deux matières plastiques différentes au cours du procédé de production et il n'est pas nécessaire de prévoir un élément de renforcement séparé. Ceci entraîne une simplification supplémentaire du procédé de production.

Suivant un autre procédé selon la présente invention, le corps de garde-boue est formé par coulée par injection dans un moule, un élément de renforcement (formé au préalable) étant disposé préalablement dans le moule de telle manière qu'il soit au moins en partie enrobé par la matière plastique introduite dans le moule.

Suivant un procédé vraiment préféré, un élément de renforcement est pourvu d'une couche intermédiaire en matière plastique, tandis que le corps de garde-boue est également formé en matière plastique qui peut se lier par chauffage (par exemple par fusion) à la matière plastique de la couche intermédiaire, et le garde-boue est chauffé jusqu'à une température à laquelle lesdites matières plastiques se lient l'une à l'autre. Lesdites matières plastiques sont de préférence une seule et même matière plastique.

Lors de l'application du procédé suivant la présente invention, le corps de renforcement est de préférence formé à froid avant d'être introduit dans le moule de coulée par injection. On obtient de très bons résultats lorsque l'on emploie un lamellé plat métal-matière plastique-métal suivant le brevet européen n° EP 0 598 428.

Il va de soi qu'un véhicule ou un moyen de transport, et en particulier un vélo, un vélomoteur ou une motocyclette, pourvu d'au moins un garde-boue suivant la présente invention, entre également dans le cadre de la présente invention.

Dans la description qui suit, dans laquelle on fait référence aux dessins annexés, on donne une description détaillée d'un certain nombre de formes de réalisation possibles d'un garde-boue suivant la présente invention et d'un procédé de production suivant la présente invention, uniquement dans le but d'illustrer et de compléter les caractéristiques de l'invention. Cette description ne peut donc en aucune manière être interprétée comme une limitation de la portée de la protection de la présente invention définie dans les revendications.

Dans les dessins auxquels il est fait référence dans cette description, les
- Fig. 1, 2 et 3: montrent trois formes de réalisation différentes d'un garde-boue de vélo suivant l'invention, présentés en coupe transversale; la
- Fig. 4: représente une autre forme de réalisation d'un garde-boue de vélo suivant la présente invention; la
- Fig. 5: illustre une partie d'une tige de renforcement et les moyens de fixation réglables avec lesquels cette tige est assemblée à un garde-boue, présentés en coupe transversale; la
- Fig. 6: montre un garde-boue de vélo suivant la présente invention, représenté en perspective; et la
- Fig. 7: représente une partie d'un garde-boue pourvu d'un support de phare.

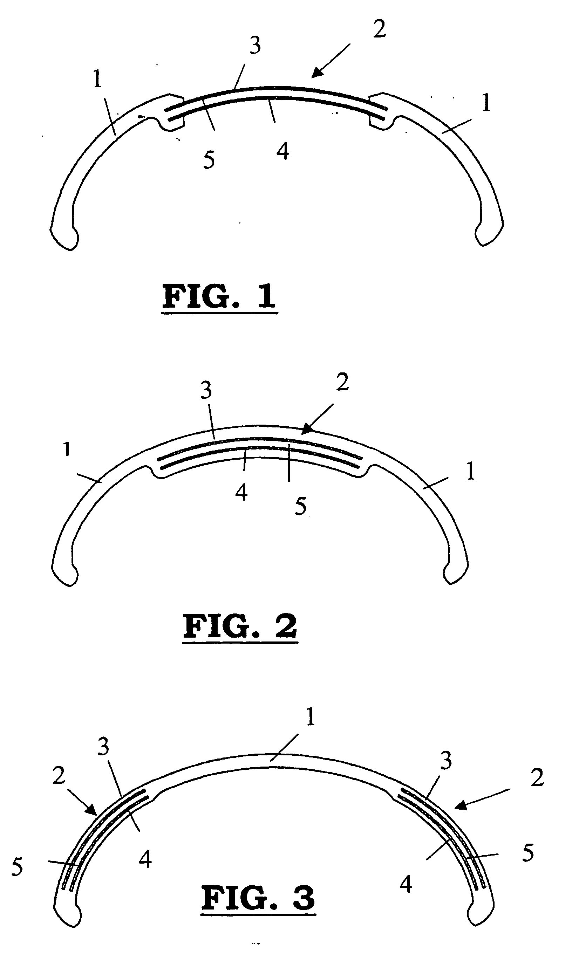

Dans les figures 1 à 3, différentes formes de réalisation d'un garde-boue de vélo suivant la présente invention sont représentées en coupe transversale. Ces garde-boue comprennent un corps de garde-boue (1) dans lequel sont noyés un ou deux corps de renforcement (2) réalisés sous forme de structures sandwich. Ces structures sandwich sont formées par un procédé d'extrusion dans lequel deux films d'aluminium (3), (4) sont prévus l'un au-dessus de l'autre et dans lequel une couche intermédiaire (5) de la même matière plastique que le corps de garde-boue (1) est extrudée entre ces films d'aluminium (3), (4). La figure 1 représente une coupe transversale à travers une zone dans laquelle l'élément de renforcement (2) est visible. Le garde-boue représenté dans la figure 3 comprend deux corps de renforcement (2) disposés parallèlement l'un à côté de l'autre.

Suivant la présente invention, un garde-boue pour un vélo peut aussi être fabriqué dans un moule de coulée par injection. Le corps (1) du garde-boue est en l'occurrence fabriqué en polypropylène. Dans le moule de coulée par injection, un élément de renforcement (2) avec une structure sandwich préalablement formé est placé dans le moule. Cet élément de renforcement (2) est réalisé en forme de plaque et il se compose d'un film d'aluminium supérieur (3) et d'un inférieur (4) d'une épaisseur de l'ordre de 0,2 mm, entre lesquels il est prévu une couche de polypropylène (5) ayant une épaisseur de l'ordre de 0,8 mm. Ce matériau en forme de plaque comprend en outre un liant afin de faire adhérer le film d'aluminium à la couche intermédiaire de polypropylène (5). Le liant utilisé contient un composant thermoplastique comme par exemple un polypropylène, et un composant thermodurcissable, comme par exemple une résine époxy. Un tel lamellé en aluminium-polypropylène-aluminium est décrit dans le brevet européen n° EP 0 598 428.

Dans une première étape du procédé appliqué, on façonne un élément de renforcement à la forme désirée à partir d'un ruban plat du lamellé en forme de plaque décrit plus haut. Ceci se fait par un formage à froid du matériau par exemple en enroulant le matériau.

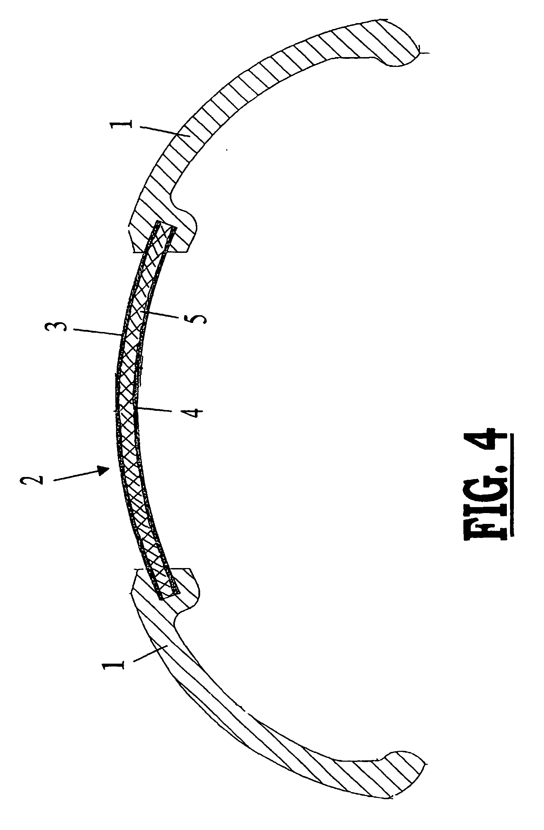

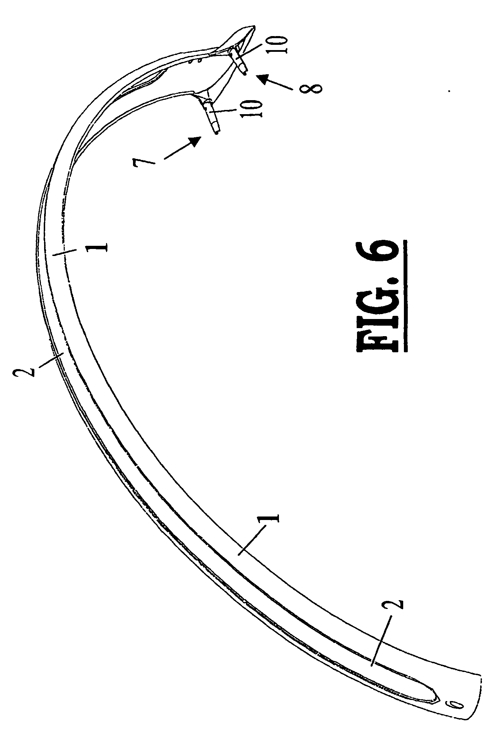

Dans une étape suivante, l'élément de renforcement (2) ainsi façonné est placé dans le moule, où il est serré entre le moule supérieur et le moule inférieur. Ensuite, on fait démarrer le procédé de coulée par injection, au cours duquel un polypropylène est introduit dans le moule et le corps de garde-boue (1) est formé en polypropylène, tandis que l'élément de renforcement (2) est enrobé par cette matière plastique. On peut veiller à ce que certaines parties du corps de renforcement (2) ne soient pas recouvertes par la matière plastique et restent donc visibles pour obtenir un effet esthétique. On peut ainsi, dans la face extérieure du garde-boue, laisser visible un ruban central orienté suivant la longueur du corps de renforcement (2) (voir figure 6) le long de la face supérieure du garde-boue. On peut aussi laisser visibles plusieurs zones de l'élément de renforcement (2) suivant un motif bien déterminé. Dans la figure 4, un tel garde-boue est représenté en coupe transversale à travers une zone où le corps de renforcement (2) est visible.

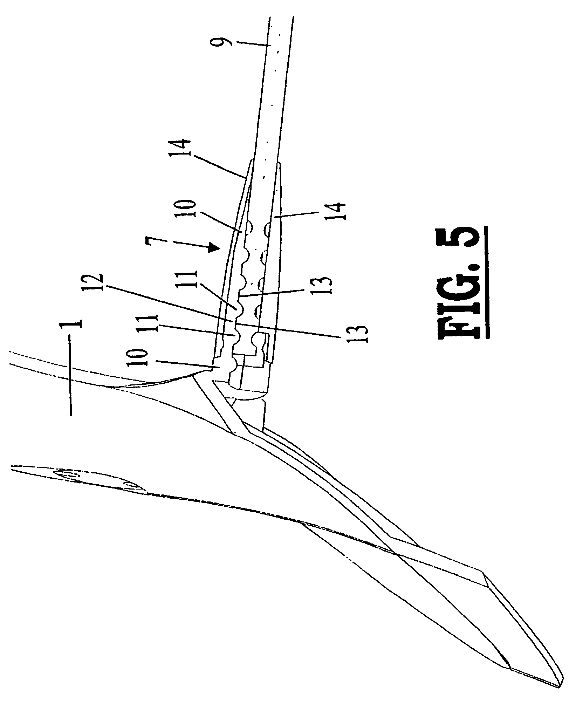

Comme on peut le voir dans les figures 5 et 6, le garde-boue comprend en outre deux systèmes de fixation (7), (8) pour réaliser un assemblage réglable entre le garde-boue et une tige de fixation (9) respective reliée à l'axe de la roue. Chaque système de fixation (7), (8) comprend une aiguille allongée partiellement cylindrique (10), dans laquelle il est prévu une série de nervures (11) et de rainures intermédiaires (12) orientées latéralement. Chaque tige de fixation (9) comporte une partie d'extrémité avec une série de dents latéralement saillantes (13) qui s'adaptent dans les rainures (12) successives des aiguilles 10). La tige de fixation (9) peut être placée dans une position au choix avec un certain nombre de dents (13) dans des rainures (12) respectives, cette position étant réglable dans le sens de la longueur de la tige (9). Chaque système de fixation comprend en outre encore une gaine (14) qui peut envelopper la partie d'extrémité de la tige de fixation (9) et une aiguille (10) afin de fixer la position choisie de la tige (9) par rapport à l'aiguille (10). La gaine (14) est maintenue dans cette position de fixation au moyen d'un assemblage à cliquet, par exemple du fait qu'un bord ou un bourrelet de la gaine (14) se cale dans une rainure prévue dans la face extérieure de l'aiguille (10).

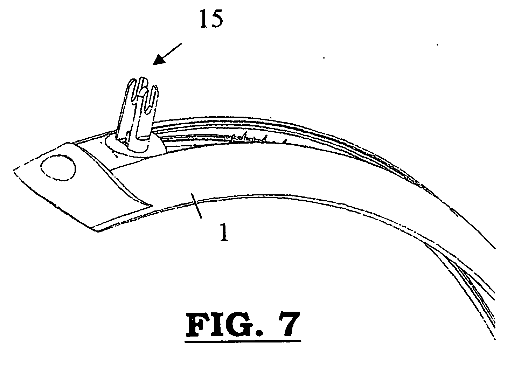

Comme on peut le voir clairement dans la figure 7, le garde-boue comprend encore un support de phare (15) formé d'un seul tenant avec le corps de garde-boue (1), dans lequel il est prévu deux éléments de contact qui sont raccordés respectivement à une couche d'aluminium (3), (4) du corps de renforcement (2). Les deux couches d'aluminium (3), (4) sont utilisées comme conducteurs électriques pour l'arrivée de courant aux éléments de contact. Sur le support de phare, on peut monter un phare (non représenté dans la figure 7), qui comprend des points de contact raccordés à la source de lumière. Dans la position montée du phare, lesdits points de contact sont en contact avec un élément de contact respectif du support de phare (15). Les raccordements électriques sont donc automatiquement réalisés lors du montage du phare sur le support de phare (15). L'assemblage du vélo se fait ainsi plus rapidement et plus facilement.

Le garde-boue peut aussi être réalisé en une seule pièce avec d'autres moyens de fixation ou accessoires. Ainsi, le garde-boue peut être pourvu sur sa face supérieure d'une série de nervures transversales, qui peuvent retenir dans le sens de la longueur du garde-boue un crochet de garde-boue monté sur le garde-boue, ou d'un pare-boue intégré, ou d'un bec décoratif ou d'un crochet de garde-boue, ou de n'importe quel moyen de fixation intégré.

## Revendications

1. Garde-boue comprenant un corps (1) fabriqué principalement en matière plastique, dans lequel au moins un élément de renforcement (2) est logé pour augmenter la rigidité du corps (1), **caractérisé en ce que** ledit élément de renforcement (2) possède une structure sandwich.

2. Garde-boue suivant la revendication 1, **caractérisé en ce que** l'élément de renforcement (2) est composé d'au moins deux couches en une première matière plastique, entre lesquelles il est prévu une couche intermédiaire en une seconde matière plastique.

3. Garde-boue suivant la revendication 1, **caractérisé en ce que** l'élément de renforcement (2) comprend au moins deux couches métalliques (3, 4), entre lesquelles il est prévu une couche intermédiaire (5) qui est fabriquée essentiellement en une matière non métallique.

4. Garde-boue suivant la revendication 3, **caractérisé en ce que** ladite couche intermédiaire (5) de l'élément de renforcement (2) est fabriquée essentiellement en matière plastique.

5. Garde-boue suivant la revendication 3, **caractérisé en ce que** ladite couche intermédiaire (5) de l'élément de renforcement se compose essentiellement de la même matière plastique que la matière plastique dont est constitué ledit corps (1).

6. Garde-boue suivant la revendication 3 ou 4, **caractérisé en ce que** ladite couche intermédiaire (5) est fabriquée en polypropylène ou en polyéthylène.

7. Garde-boue suivant l'une quelconque des revendications 3 à 5, **caractérisé en ce que** lesdites couches métalliques (3, 4) sont fabriquées en aluminium.

8. Garde-boue suivant l'une quelconque des revendications 3 à 6, **caractérisé en ce qu'**au moins une desdites couches métalliques (3, 4) est prévue pour être utilisée comme conducteur pour un courant électrique.

9. Garde-boue suivant l'une quelconque des revendications précédentes, **caractérisé en ce que** ledit élément de renforcement (2) comprend deux couches extérieures (3, 4) en métal et une couche intermédiaire (5) en polypropylène, et **en ce que** les couches extérieures (3, 4) ont une épaisseur comprise entre 0,08 mm et 0,3 mm, tandis que l'épaisseur de la couche intermédiaire (5) est comprise entre 0,5 mm et 2 mm.

10. Garde-boue suivant la revendication 8, **caractérisé en ce que** l'élément de renforcement (2) contient un liant avec lequel on réalise une liaison entre les couches métalliques (3), (4) et la couche intermédiaire (5) en matière plastique.

11. Garde-boue suivant l'une quelconque des revendications précédentes, **caractérisé en ce que** ledit corps (1) avec l'élément de renforcement (2) logé dans celui-ci est fabriqué sous forme d'un tout.

12. Procédé pour la fabrication d'un garde-boue en matière plastique, dans lequel un corps de garde-boue (1) est formé en un tout en matière plastique, **caractérisé en ce que**, pendant la production de ce corps de garde-boue (1), un élément de renforcement (2) avec une structure sandwich est enrobé au moins en partie par la matière du corps de garde-boue (1).

13. Procédé pour la fabrication d'un garde-boue en matière plastique suivant la revendication 12, **caractérisé en ce que** le corps de garde-boue (1) est formé par application d'un procédé d'extrusion, ou d'un procédé de coulée par injection.

14. Procédé pour la fabrication d'un garde-boue en matière plastique suivant la revendication 12 ou 13, **caractérisé en ce que**, pendant le procédé de production du corps de garde-boue (1), un élément de renforcement (2) est formé en formant une structure sandwich en au moins deux matières plastiques différentes.

15. Procédé pour la fabrication d'un garde-boue en matière plastique suivant la revendication 12, **caractérisé en ce que** le corps de garde-boue (1) est formé par coulée par injection dans un moule et **en ce que** ledit élément de renforcement (2) est placé au préalable dans le moule de telle manière qu'il soit au moins en partie enrobé par la matière plastique introduite dans le moule.

16. Procédé pour la fabrication d'un garde-boue suivant l'une quelconque des revendications 12 à 15, **caractérisé en ce que** l'élément de renforcement (2) comprend une couche intermédiaire (5) en une matière plastique, **en ce que** le corps de garde-boue (1) est formé en une matière plastique qui peut se lier par chauffage à la matière plastique de la couche intermédiaire (5), et **en ce que** le garde-boue est chauffé jusqu'à une température à laquelle lesdites matières plastiques se lient l'une à l'autre.

17. Procédé pour la fabrication d'un garde-boue suivant l'une quelconque des revendications 12 à 16, **caractérisé en ce que** le corps de renforcement (2) est formé à froid avant d'être placé dans le moule de coulée par injection.

18. Véhicule ou moyen de transport, en particulier vélo, **caractérisé en ce qu'**il comprend au moins un garde-boue suivant l'une quelconque des revendications 1 à 11.

## Claims

1. Mudguard comprising a body (1), substantially manufactured from plastic material, in which is lodged at least one reinforcement element (2) to increase the stiffness of the body (1); **characterised in that** said reinforcement element (2) comprises a sandwich structure.

2. Mudguard according to claim 1, **characterised in that** the reinforcement element (2) comprises at least two layers of a first plastic material, between which an intermediate layer of a second plastic material is provided.

3. Mudguard according to claim 1, **characterised in that** the reinforcement element (2) comprises at least two metal layers (3, 4) between which an intermediate layer (5) is provided, which is manufactured essentially from a non-metal material.

4. Mudguard according to claim 3, **characterised in that** said intermediate layer (5) of the reinforcement element (2) is manufactured essentially from plastic material.

5. Mudguard according to claim 3, **characterised in that** said intermediate layer (5) of the reinforcement element is made of essentially the same plastic material as the plastic material of which said body (1) is made.

6. Mudguard according to claim 3 or 4, **characterised in that** said intermediate layer (5) is made of polypropylene or polyethylene.

7. Mudguard according to any one of claims 3 to 5, **characterised in that** said metal layers (3, 4) are made of aluminium.

8. Mudguard according to any one of claims 3 to 6, **characterised in that** at least one of said metal layers (3, 4) is suitable to be used as a conductor for an electric current.

9. Mudguard according to any one of the preceding claims, **characterised in that** said reinforcement element (2) comprises two outer metal layers (3, 4) and an intermediate propylene layer (5) and **in that** the outer layers (3, 4) have a thickness comprised between 0.08 mm and 0.3 mm, whilst the thickness of the intermediate layer (5) is comprised between 0.5 mm and 2 mm.

10. Mudguard according to claim 8, **characterised in that** the reinforcement element (2) comprises a binder by which a link is realised between the metal layers (3, 4) and the intermediate layer (5) in plastic material.

11. Mudguard according to any one of the preceding claims, **characterised in that** said body (1) with lodged in reinforcement element (2) is manufactured to form a whole.

12. Process for manufacturing of a mudguard in plastic material, in which a mudguard body (1) is formed as a whole in plastic material, **characterised in that**, during production of this mudguard body (1), a reinforcement element (2) with a sandwich structure will be at least partly covered by the material of the mudguard body (1).

13. Process for manufacturing of a mudguard in plastic material according to claim 12, **characterised in that** the mudguard body (1) is formed by application of an extrusion process or by an injection-casting process.

14. Process for manufacturing of a mudguard in plastic material according to claim 12 or 13, **characterised in that**, during production of this mudguard body (1), a reinforcement element (2) is formed by forming a sandwich structure from at least two different plastic materials.

15. Process for manufacturing of a mudguard in plastic material according to claim 12, **characterised in that** the mudguard body (1) is formed by injection-casting in a mould and **in that** said reinforcement element (2) was previously placed in the mould so that it will be covered at least partly by the plastic material entered the mould.

16. Process for manufacturing of a mudguard according to any one of claims 12 to 15, **characterised in that** the reinforcement element (2) comprises an intermediate layer (5) in a plastic material, **in that** the mudguard body (1) is formed in a plastic material that can bind by heat to the plastic material of the intermediate layer (5) and **in that** the mudguard is heated to a temperature at which said plastic materials bond with each other.

17. Process for manufacturing of a mudguard according to any one of claims 12 to 16, **characterised in that** the reinforcement element (2) is cold-formed before it is being placed in the injection-casting mould.

18. Vehicle or transportation device, in particular a bicycle, **characterised in that** it comprises at least one mudguard according to any one of claims 1 to 11.

## Patentansprüche

1. Kotflügel mit einem hauptsächlich aus Kunststoff hergestellten Körper (1), in dem mindestens ein Verstärkungselement (2) eingebaut ist, um die Steifigkeit des Körpers (1) zu erhöhen, **dadurch gekennzeichnet, dass** das Verstärkungselement (2) eine Sandwichstruktur besitzt.

2. Kotflügel gemäß Anspruch 1, **dadurch gekennzeichnet, dass** das Verstärkungselement (2) aus mindestens zwei Schichten aus einem ersten Kunststoff besteht, zwischen denen eine Zwischenschicht aus einem zweiten Kunststoff vorgesehen ist.

3. Kotflügel gemäß Anspruch 1, **dadurch gekennzeichnet, dass** das Verstärkungselement (2) mindestens zwei Metallschichten (3, 4) aufweist, zwischen denen eine Zwischenschicht (5) vorgesehen ist, welche im Wesentlichen aus einem nicht metallischen Material hergestellt ist.

4. Kotflügel gemäß Anspruch 3, **dadurch gekennzeichnet, dass** die Zwischenschicht (5) des Verstärkungselementes (2) im Wesentlichen aus Kunststoff hergestellt ist.

5. Kotflügel gemäß Anspruch 3, **dadurch gekennzeichnet, dass** die Zwischenschicht (5) des Verstärkungselementes im Wesentlichen aus dem gleichen Kunststoff besteht, aus dem der Körper (1) aufgebaut ist.

6. Kotflügel gemäß Anspruch 3 oder 4, **dadurch gekennzeichnet, dass** die Zwischenschicht (5) aus Polypropylen oder aus Polyethylen hergestellt ist.

7. Kotflügel gemäß irgendeinem der Ansprüche 3 bis 5, **dadurch gekennzeichnet, dass** die Metallschichten (3, 4) aus Aluminium hergestellt sind.

8. Kotflügel gemäß irgendeinem der Ansprüche 3 bis 6, **dadurch gekennzeichnet, dass** mindestens eine der Metallschichten (3, 4) als Leiter für elektrischen Strom verwendet werden soll.

9. Kotflügel gemäß irgendeinem der vorhergehenden Ansprüche, **dadurch gekennzeichnet, dass** das Verstärkungselement (2) zwei Außenschichten (3, 4) aus Metall und eine Zwischenschicht (5) aus Polypropylen aufweist und dass die Außenschichten (3, 4) eine Dicke von 0,08 mm bis 0,3 mm haben, während die Dicke der Zwischenschicht (5) 0,5 mm bis 2 mm beträgt.

10. Kotflügel gemäß Anspruch 8, **dadurch gekennzeichnet, dass** das Verstärkungselement (2) ein Bindemittel enthält, mit dem eine Verbindung zwischen den Metallschichten (3, 4) und der Zwischenschicht (5) aus Kunststoff hergestellt wird.

11. Kotflügel gemäß irgendeinem der vorhergehenden Ansprüche, **dadurch gekennzeichnet, dass** der Körper (1) mit dem darin eingebauten Verstärkungselement (2) als Ganzes hergestellt wird.

12. Verfahren zur Herstellung eines Kotflügels aus Kunststoff, bei dem ein Kotflügelkörper (1) als Ganzes aus Kunststoff geformt wird, **dadurch gekennzeichnet, dass** während der Herstellung dieses Kotflügelkörpers (1) ein Verstärkungselement (2) mit Sandwichstruktur zumindest teilweise mit dem Material des Kotflügelkörpers (1) umhüllt wird.

13. Verfahren zur Herstellung eines Kotflügels aus Kunststoff gemäß Anspruch 12, **dadurch gekennzeichnet, dass** der Kotflügelkörper (1) durch Anwendung eines Extrusionsverfahrens oder eines Spritzgussverfahrens geformt wird.

14. Verfahren zur Herstellung eines Kotflügels aus Kunststoff gemäß Anspruch 12 oder 13, **dadurch gekennzeichnet, dass** während des Verfahrens zur Herstellung des Kotflügelkörpers (1) ein Verstärkungselement (2) gebildet wird, indem eine Sandwichstruktur aus mindestens zwei verschiedenen Kunststoffen gebildet wird.

15. Verfahren zur Herstellung eines Kotflügels aus Kunststoff gemäß Anspruch 12, **dadurch gekennzeichnet, dass** der Kotflügelkörper (1) durch Formspritzguss geformt wird und dass das Verstärkungselement (2) vorher so in die Form eingelegt wird, dass es zumindest teilweise mit dem in die Form eingefüllten Kunststoff umhüllt ist.

16. Verfahren zur Herstellung eines Kotflügels gemäß irgendeinem der Ansprüche 12 bis 15, **dadurch gekennzeichnet, dass** das Verstärkungselement (2) eine Zwischenschicht (5) aus einem Kunststoff aufweist, dass der Kotflügelkörper (1) aus einem Kunststoff gebildet ist, der sich durch Erhitzung mit dem Kunststoff der Zwischenschicht (5) verbinden kann und dass der Kotflügel bis auf eine Temperatur erhitzt wird, bei der sich die Kunststoffe miteinander verbinden.

17. Verfahren zur Herstellung eines Kotflügels gemäß irgendeinem der Ansprüche 12 bis 16, **dadurch gekennzeichnet, dass** das Verstärkungselement (2) kalt geformt wird, bevor es in die Spritzgussform eingelegt wird.

18. Fahrzeug oder Transportmittel, insbesondere Fahrrad, **dadurch gekennzeichnet, dass** es mindestens einen Kotflügel gemäß irgendeinem der Ansprüche 1 bis 11 aufweist.
